# EUROPÄISCHE PATENTANMELDUNG

(11) **EP 1 844 984 A2**
(43) Veröffentlichungstag der Anmeldung: **17.10.2007**
(21) Anmeldenummer: 07006013.2
(22) Anmeldetag: 22.03.2007
(51) Int. Cl.: B60R 5/04

(54) **Laderaum für ein Kraftfahrzeug mit einer Schutzvorrichtung**

(30) Priorität: 11.04.2006 DE 102006018079
(71) Anmelder: BOS GmbH & Co. KG, 73760 Ostfildern (DE)
(72) Erfinder: Ehrenberger, Marina, 73061 Ebersbach (DE)
(74) Vertreter: Patentanwälte Ruff, Wilhelm, Beier, Dauster & Partner

(57) **Zusammenfassung**

Ein Laderaum (1) für ein Kraftfahrzeug mit einer Schutzvorrichtung, die ein flexibles Flächengebilde (10) zum Zurückhalten von Ladegut umfasst und eine formstabile Gehäuseeinheit (4,5) aufweist, die in laderaumseitigen Halterungen (6) lösbar gehalten ist, ist bekannt.

Erfindungsgemäß sind Mittel (17-20) zum Überführen der Gehäuseeinheit in eine mit den laderaumseitigen Halterungen (6) formschlüssige Sicherungsposition abhängig von einer auf das Flächengebilde (10) wirkenden Zug- oder Biegebelastung vorgesehen.

Einsatz für Personenkraftwagen.

## Beschreibung

Die Erfindung betrifft einen Laderaum für ein Kraftfahrzeug mit einer Schutzvorrichtung, die ein flexibles Flächengebilde zum Rückhalten von Ladegut umfasst und eine formstabile Gehäuseeinheit aufweist, die in laderaumseitigen Halterungen lösbar gehalten ist, sowie eine Schutzvorrichtung für einen Kraftfahrzeuginnenraum, insbesondere eines derartigen Laderaums.

Als Schutzvorrichtungen dienende Trennvorrichtungen für Laderäume von Personenkraftwagen sind allgemein bekannt. Eine derartige Trennvorrichtung weist ein flexibles Flächengebilde in Form eines Trennnetzes auf, das auf einer Wickelwelle auf- und abwickelbar gehalten ist. Die Wickelwelle ist in einem Kassettengehäuse drehbar gelagert, das etwa auf Höhe einer Fahrzeugbordkante zwischen gegenüberliegenden Seitenbrüstungen des Laderaumes erstreckt und in laderaumseitigen Halterungen befestigt ist. Das Trennnetz ist in seiner Schutzposition zu einem Dachhimmel nach oben ausgezogen und im Bereich des Dachhimmels eingehängt, so dass sich das Trennnetz etwa vertikal nach oben erstreckt. Das Trennnetz dient dazu, Ladegut, das sich im Laderaum befindet, bei einer starken Fahrzeugverzögerung im Laderaum zurückzuhalten und so zu verhindern, dass Ladegut in den Fahrgastraum nach vorne geschleudert wird. Das Kassettengehäuse wird durch aufwändig gestaltete und bedienbare Befestigungseinrichtungen in den fahrzeugseitigen Halterungen lösbar verriegelt. Um das Kassettengehäuse entnehmen zu können, müssen die Befestigungseinrichtungen gelöst werden.

Aufgabe der Erfindung ist es, einen Laderaum der eingangs genannten Art zu schaffen, der mit einer komfortabel bedienbaren und dennoch eine sichere Schutzfunktion aufweisenden Schutzvorrichtung versehen ist.

Diese Aufgabe wird dadurch gelöst, dass Mittel zum Überführen der Gehäuseeinheit in eine mit den laderaumseitigen Halterungen formschlüssige Sicherungsposition abhängig von einer auf das Flächengebilde wirkenden Zug- oder Biegebelastung vorgesehen sind. Erfindungsgemäß wird zwangsläufig mit einer entsprechenden Belastung auf das Flächengebilde die Gehäuseeinheit in die mit den laderaumseitigen Halterungen formschlüssig verriegelte Sicherungsposition überführt. Dabei kann entweder die Gehäuseeinheit selbst geringfügig verlagert werden, oder die Gehäuseeinheit umfasst wenigstens ein Sicherungselement, das abhängig von der auf das Flächengebilde wirkenden Zug- oder Biegebelastung in eine mit der jeweiligen laderaumseitigen Halterung formschlüssig verriegelte Sicherungsposition überführt wird. Es ist auch möglich, laderaumseitig entsprechend bewegliche Sicherungselemente vorzusehen, die mit der Bewegung des Flächengebildes so gekoppelt sind, dass sie bei entsprechender Belastung aus der Ruheposition in die mit der Gehäuseeinheit formschlüssige Sicherungsposition überführt werden. Der Formschluss ist auf die Achsrichtung der Wickelachse der Wickelwelle bezogen. Die wesentliche Idee der Erfindung ist es, eine formschlüssige Verbindung der Gehäuseeinheit mit den laderaumseitigen Halterungen nur für den Fall vorzusehen, wenn das Flächengebilde in seine Schutzposition überführt wird oder in bereits befindlicher Schutzposition durch hineingeschleudertes Ladegut belastet wird. Die Gehäuseeinheit kann somit äußerst einfach im Bereich der laderaumseitigen Halterungen eingesetzt oder entnommen werden, wenn das Flächengebilde sich in seiner auf die Wickelwelle aufgewickelten Ruheposition befindet. In vorteilhafter Weise ist es möglich, die Gehäuseeinheit mit Gehäuseseitenteilen zu versehen, zwischen denen die Wickelwelle drehbar gelagert ist, wobei wenigstens ein Gehäuseseitenteil koaxial oder achsparallel zur Drehachse der Wickelwelle verschiebbar angeordnet ist, um ein Lösen oder Einsetzen der Gehäuseeinheit in die laderaumseitigen Halterungen zu vereinfachen. Je nach Gestaltung der Gehäuseseitenteile und der Wickelwelle kann auf eine Kapselung der Wickelwelle zwischen den Gehäuseseitenteilen durch ein entsprechendes Gehäuseteil verzichtet werden. Die Kräfte werden dann über die Wickelwelle übertragen.

Falls die Mittel zum Überführen der Gehäuseeinheit in eine Sicherungsposition der Wickelwelle zugeordnet sind, muss die Gehäuseeinheit selbst nicht so stabil ausgeführt sein, dass sie entsprechende Kräfte aufnehmen kann, wie dies bei bekannten Kassettengehäusen der Fall ist, die mittels formschlüssig wirksamer Befestigungseinrichtungen in laderaumseitigen Halterungen befestigbar sind.

In Ausgestaltung der Erfindung weisen die Mittel zum Überführen im Bereich der laderaumseitigen Halterungen Führungsprofilierungen auf, die ausgehend von einer unbelasteten Befestigungslage der Gehäuseeinheit in Richtung einer Ausweichbewegung der Gehäuseeinheit bei einer Zug- oder Biegebelastung auf das Flächengebilde gerichtet sind, und an der Gehäuseeinheit sind Führungselemente vorgesehen, die derart korrespondierend zu den Führungsprofilierungen ausgeführt sind, dass sie bei einer Ausweichbewegung der Gehäuseeinheit in die Führungsprofilierungen eintauchen und diese längs einer Drehachse einer Wickelwelle zum Auf- und Abwickeln des Flächengebildes formschlüssig hintergreifen. Die Führungsprofilierungen sind vorzugsweise als Schlitze im Bereich der laderaumseitigen Halterungen ausgeführt und die Führungselemente sind vorteilhaft als Zapfen ausgeführt, die im Bereich gegenüberliegender Stirnenden der Gehäuseeinheit angeordnet sind und in die Führungsprofilierungen eintauchen. Es ist auch möglich, als Führungsprofilierungen im Bereich der laderaumseitigen Halterungen zapfen-oder stegartige Profile vorzusehen und dementsprechend die gehäuseseitigen Führungselemente nut- oder aufnahmeförmig zu gestalten.

In weiterer Ausgestaltung der Erfindung sind die Führungsprofilierungen als in Fahrzeughochrichtung gerichtete Kulissenführungen gestaltet, und die Führungselemente sind als längs der Drehachse der Wickelwelle abragende, mit einem verdickten Kopf versehene Führungszapfen ausgeführt, deren Durchmesser derart auf die Kulissenführungen abgestimmt ist, dass die Führungszapfen gleitend in den Kulissenführungen verlagerbar sind. Vorzugsweise sind die Führungszapfen in Verlängerung der Drehachse der Wickelwelle beweglich gelagert. Zusätzlich ist es möglich, dass die Führungszapfen um einen bestimmten Schwenkwinkel verdrehbar ausgeführt sind.

In weiterer Ausgestaltung der Erfindung umfassen die Mittel zum Überführen der Gehäuseeinheit in eine formschlüssige Sicherungsposition wenigstens ein der Gehäuseeinheit zugeordnetes Sicherungselement, das zwischen einer verriegelten und einer entriegelten Stellung beweglich zu der Gehäuseeinheit angeordnet ist, wobei das Sicherungselement über eine Zwangskopplungseinrichtung derart mit einer Wickelwelle, auf der das flexible Flächengebilde auf- und abwickelbar gehalten ist, wirkverbunden ist, dass bei einer Drehbewegung der Wickelwelle das Sicherungselement drehrichtungsabhängig in seine verriegelte oder seine entriegelte Stellung überführt wird. Bei dieser Ausführungsform verbleibt die Gehäuseeinheit in einer stationären Position. Um dennoch mit einfachen Mitteln eine Verriegelung der Gehäuseeinheit in den laderaumseitigen Halterungen zu ermöglichen, ist in vorteilhafter Weise die Bewegung wenigstens eines Sicherungselementes zwischen einer entriegelten und einer verriegelten Stellung an eine Aus- oder Einziehbewegung des Flächengebildes gekoppelt. Die Gehäuseeinheit wird somit zwangsläufig in ihrer laderaumseitigen Position blockiert, sobald das Flächengebilde ausgezogen und in seine aufgespannte Schutzposition eingehängt wird. In entsprechend umgekehrter Weise wird die Verriegelung der Gehäuseeinheit automatisch gelöst, sobald das Flächengebilde aus seiner aufgespannten Schutzposition heraus gelöst und innerhalb der Gehäuseeinheit wieder aufgewickelt wird. Die Gehäuseeinheit kann als formstabiles Kassettengehäuse ausgeführt sein. In vorteilhafter Weise besteht die Gehäuseeinheit lediglich aus zwei becherartigen Gehäuseseitenteilen, zwischen denen sich die Wickelwelle zusammen mit dem aufgewickelten Flächengebilde im Wesentlichen frei erstreckt. Ein aufwändiges, über seine gesamte Länge geschlossenes Kassettengehäuse wird bei dieser Ausführungsform nicht benötigt. Vorteilhaft ist der Wickelwelle und damit den gegenüberliegenden Gehäuseseitenteilen jeweils ein Sicherungselement zugeordnet, deren Bewegung über die Aus- oder Einziehbewegung des Flächengebildes und damit die entsprechende Drehbewegung der Wickelwelle synchronisiert ist.

In weiterer Ausgestaltung der Erfindung umfasst die Zwangskopplungseinrichtung ein mit der Drehbewegung der Wickelwelle gekoppeltes Bewegungsübertragungselement, das mit einer Zwangsführung versehen ist, das auf das Sicherungselement derart wirkt, dass das Sicherungselement bei einer Drehbewegung der Wickelwelle in seine ver- oder entriegelte Position überführt wird. Bei dieser Ausführungsform handelt es sich um eine mechanische Zwangskopplung, die besonders robust und funktionssicher ist.

In weiterer Ausgestaltung der Erfindung ist das Sicherungselement mittels der Zwangsführung zwischen der verriegelten und der entriegelten Stellung um einen Drehwinkel ungleich einer halben oder einer vollen Umdrehung begrenzt verdrehbar. Diese Ausgestaltung stellt sicher, dass das Sicherungselement so weit gedreht wird, dass es sich in den unterschiedlichen Endstellungen in unterschiedlicher Ausrichtung befindet. Das Sicherungselement selbst muss im Bereich seines Kopfes rotationsunsymmetrisch, insbesondere T-artig, ausgeführt sein, um die verschiedenen Stellungen zu realisieren. In vorteilhafter Weise ist das Sicherungselement um 90° verdrehbar und weist einen T-artigen Kopf auf, der in einer Stellung mit einer korrespondierenden Führungsnut der laderaumseitigen Führungsprofilierung fluchtet und in der anderen Stellung quer zu der Führungsnut ausgerichtet ist.

In weiterer Ausgestaltung der Erfindung umfasst die Zwangsführung eine wendelförmige, koaxial zur Drehachse der Wickelwelle verlaufende Führungsnut, in der ein drehfest mit dem Sicherungselement verbundener Kulissenzapfen geführt ist. Vorzugsweise ist die Führungsnut in einer Führungshülse vorgesehen, die koaxial zur Drehachse der Wickelwelle ausgerichtet ist. Die wendelförmige Führungsnut einschließlich des Hülsenteiles, in dem sie ausgebildet ist, ist gemeinsam mit der Wickelwelle drehbeweglich. Das Sicherungselement ist zum einen in Verlängerung der Drehachse der Wickelwelle axial beweglich, um ein Eintauchen des Sicherungselementes in die Führungsnut zu ermöglichen. Zum anderen wird das Sicherungselement durch die entsprechende Zwangsführung während seiner Axialbewegung zusätzlich um den begrenzten Drehwinkel verdreht, um die Verriegelung in der Führungsnut zu erzielen.

In weiterer Ausgestaltung der Erfindung umfasst die Zwangsführung eine mit der Wickelwelle drehfeste Mitnehmerscheibe, die kraftschlüssig oder formschlüssig auf einen mit dem Sicherungselement drehfest verbundenen Mitnehmerzapfen einwirkt. Eine Drehung der Wickelwelle bewirkt eine Drehung der Mitnehmerscheibe, die bei ihrer Drehbewegung den Mitnehmerzapfen kraft- oder reibschlüssig derart begrenzt mitnimmt, dass die gewünschte begrenzte Verdrehung des Sicherungselementes erreicht wird.

In weiterer Ausgestaltung der Erfindung sind dem Sicherungselement Energieabsorptionsmittel zugeordnet, die zwischen Sicherungselement und Gehäuseeinheit bei durch einen Fahrzeugaufprall bewirkten Belastungen energieumwandelnd wirken. Vorzugsweise wird entsprechende Bewegungsenergie zwischen Sicherungselement und Gehäuseeinheit in Deformationsenergie umgesetzt, indem das Energieabsorptionsmittel plastisch deformiert wird. Besonders bevorzugt umfassen hierzu die Energieabsorptionsmittel wenigstens ein plastisch deformierbares Pufferelement.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung schematisch einen Laderaum eines Kraftfahrzeugs, der mit einer Schutzvorrichtung versehen ist,
- Fig. 2: die Schutzvorrichtung nach Fig. 1 in ihrer laderaumseitig montierten Position,
- Fig. 3: die Schutzvorrichtung nach den Fig. 1 und 2 mit nach oben ausgezogenem, flexiblem Flächengebilde,
- Fig. 4: die Schutzvorrichtung nach den Fig. 1 bis 3 in ihrer Schutzposition, in der das flexible Flächengebilde Ladegut im Laderaum zurückhält,
- Fig. 5: eine weitere Ausführungsform einer Schutzvorrichtung für einen erfindungsgemäßen Laderaum, wobei die Schutzvorrichtung in nicht montierter Position dargestellt ist,
- Fig. 6: die Schutzvorrichtung nach Fig. 5 in montierter und laderaumseitig gesicherter Funktionsposition,
- Fig. 7a: einen Ausschnitt der laderaumseitigen Halterung der Schutzvorrichtung nach den Fig. 5 und 6,
- Fig. 7b: in schematischer Längsschnittdarstellung einen Ausschnitt der Schutzvorrichtung nach den Fig. 5 und 6 in montierter Position,
- Fig. 8a: die laderaumseitige Halterung nach Fig. 7a, bei der ein Sicherungselement der Gehäuseeinheit der Schutzvorrichtung in seine verriegelte Position überführt ist,
- Fig. 8b: in einem Längsschnitt schematisch dargestellt einen Teil der Schutzvorrichtung nach den Fig. 5 und 6 in ihrer laderaumseitig verriegelten Schutzposition,
- Fig. 9a: in vergrößerter perspektivischer Darstellung einen Teilbereich der Schutzvorrichtung nach den Fig. 7b und 8b,
- Fig. 9b: den Teilbereich nach Fig. 9a, bei der ein Sicherungselement der Gehäuseeinheit in eine axial nach außen verlagerte Position überführt ist,
- Fig. 10 bis 12: eine weitere Ausführungsform einer Schutzvorrichtung, bei der das Sicherungselement der Gehäuseeinheit durch eine Mitnehmerscheibe in die Verriegelungsstellung überführbar ist und
- Fig. 13: schematisch eine Zusatzfunktion der Ausführungsform nach den Fig. 10 bis 12, die zur Energieabsorption im Crashfall beiträgt.

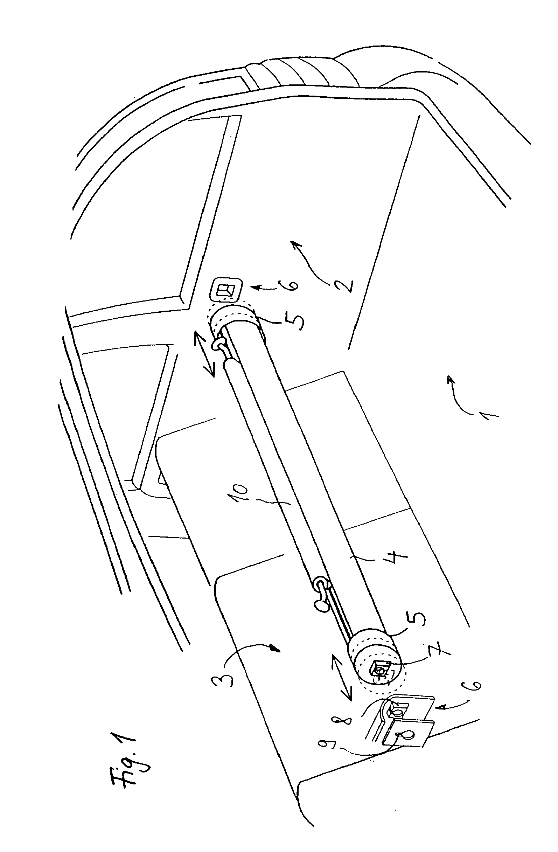

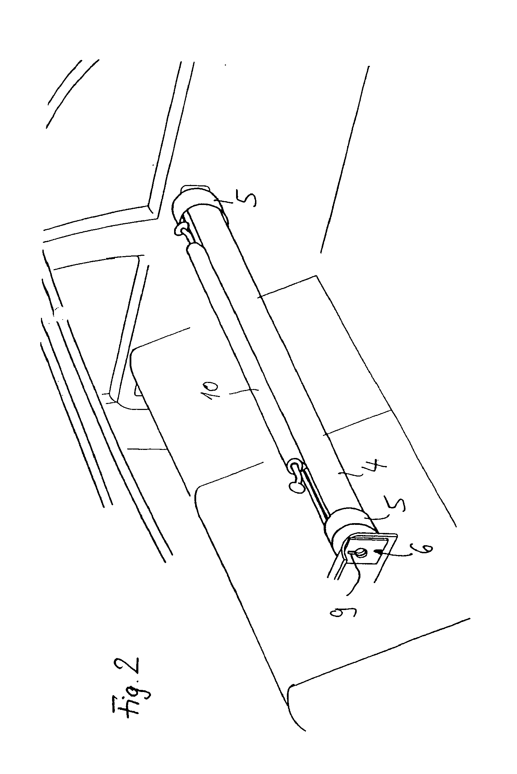

In den Fig. 1 bis 4 ist ein Laderaum 1 eines Personenkraftwagens, insbesondere eines Kombi-Personenkraftwagens, einer Großraumlimousine oder eines SUV's dargestellt, der nach hinten durch eine nicht näher bezeichnete Heckklappe verschließbar ist. Auf gegenüberliegenden Fahrzeugseiten ist der Laderaum 1 durch zwei Laderaumseitenwandungen 2 begrenzt. In normaler Fahrtrichtung nach vorne ist der Laderaum 1 durch eine Rückenlehnenanordnung 3 einer Fondsitzbank begrenzt. Die Rückenlehnenanordnung 3 ist in ein- oder mehrteiliger Ausführung umklappbar, wie aus den Fig. 1 bis 4 erkennbar ist. Dem Laderaum 1 ist eine nachfolgend näher beschriebene Schutzvorrichtung zugeordnet, die in laderaumseitigen Halterungen 6 im Bereich der gegenüberliegenden Laderaumseitenwandungen 2 knapp unterhalb einer Fahrzeugbordkante montierbar ist.

Die Schutzvorrichtung weist ein als Gehäuseeinheit im Sinne der Erfindung dienendes Kassettengehäuse 4, 5 auf, das durch ein Kassettenprofil 4 und zwei Gehäuseseitenteile 5 gebildet wird. Die beiden Gehäuseseitenteile 5 sind becherartig ausgeführt und relativ zu dem Kassettenprofil 4 begrenzt längsverschiebbbar angeordnet, wie durch die gestrichelte Darstellung und die Doppelpfeile in Fig. 1 verdeutlicht ist. In dem Kassettengehäuse ist eine Wickelwelle drehbar gelagert, auf der ein flexibles Flächengebilde in Form eines Trennnetzes 10 auf- und abwickelbar gehalten ist.

Zum Montieren des Kassettengehäuses 4, 5 in den laderaumseitigen Halterungen 6 sind an den Stirnseiten der Gehäuseseitenteile 5 nockenartige Anformungen vorgesehen, die in korrespondierende Aufnahmen 8 der laderaumseitigen Halterungen 6 eintauchen. Beide Gehäuseseitenteile 5 sind längs einer Drehachse der Wickelwelle axial nach außen federkraftbeaufschlagt, so dass die Gehäuseseitenteile 5 mit ihren Anformungen 7 in die Aufnahmen der fahrzeugseitigen Halterungen 6 hineingedrückt werden.

Bei einem Crashfall, insbesondere einem Seitencrash, würden die Gehäuseseitenteile 5 aus den laderaumseitigen Halterungen 6 herausgedrückt werden, so dass die Schutzvorrichtung frei im Kraftfahrzeuginnenraum herumgeschleudert werden könnte. Da der Kraftfahrzeuginnenraum nicht nur den Laderaum 1, sondern auch durch den die Fondsitzbank enthaltenden Fahrgastraum gebildet wird, könnten erhebliche Verletzungsgefahren für Fahrzeuginsassen auftreten. Auch für den Fall, dass Ladegut in das vertikal nach oben aufgespannte Trennnetz 10 hineingeschleudert wird, könnte ein Ausreißen des Kassettengehäuses aus den laderaumseitigen Halterungen 6 erfolgen.

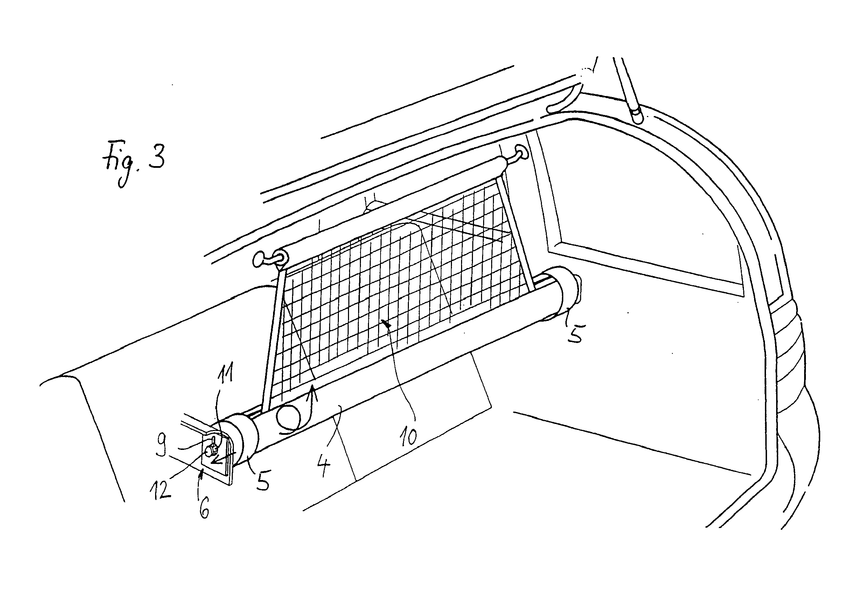

Um im Crashfall oder bei starken Fahrzeugverzögerungen, bei denen Ladegut in das Trennnetz 10 hineingeschleudert wird, zu vermeiden, dass das Kassettengehäuse 4, 5 sich aus den laderaumseitigen Halterungen löst, sind den gegenüberliegenden Gehäuseseitenteilen 5 zusätzliche Sicherungsmittel zugeordnet, die nachfolgend näher beschrieben werden. Die Sicherungsmittel umfassen zapfenartige Sicherungselemente 11, 12, die im Bereich von gegenüberliegenden Stirnenden der Wickelwelle koaxial zur Drehachse der Wickelwelle axial beweglich gelagert sind. Wie anhand der Fig. 3 angedeutet ist, wird das Sicherungselement 11, 12 abhängig von einer Ausziehbewegung des Trennnetzes 10 nach oben in eine Sicherungsposition axial nach außen verlagert.

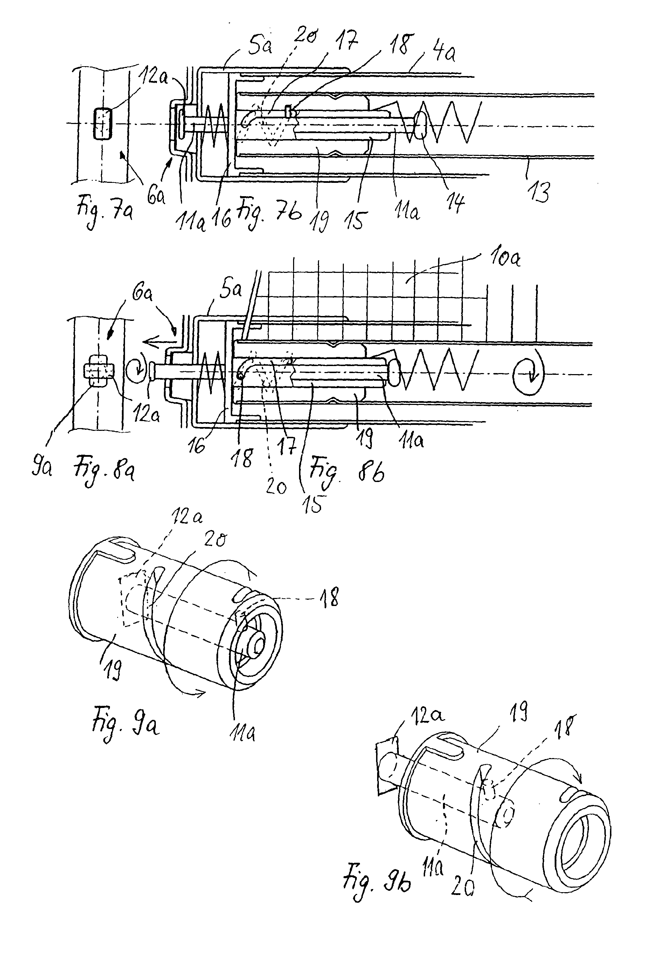

Hierzu dient eine Zwangskopplungseinrichtung, die nach Art der Darstellung nach den Fig. 9a und 9b ausgeführt sein kann. Der bolzenartige Sicherungszapfen 11, 12 ist hierzu in einem hülsenartig gestalteten Fortsatz einer Stirnkappe der Wickelwelle verschiebbar gelagert, wobei die Stirnkappe stirnseitig mit dem Kassettenprofil 4 fest verbunden ist und somit relativ zur drehbeweglichen Wickelwelle stationär gehalten ist. Die Stirnkappe mit angeformtem hülsenartigen Fortsatz zur Schiebelagerung des Sicherungszapfens 11, 12 kann entsprechend der Darstellung nach den Fig. 7b und 8b ausgeführt sein.

Der Sicherungszapfen weist an seinem freien Stirnende einen verbreiterten Kopf 12 auf, der tellerartig gestaltet ist. Die Zwangskopplung der Drehbewegung der Wickelwelle mit einer Verschiebebewegung des Sicherungszapfens erfolgt über eine mit der Wickelwelle drehbeweglich gelagerte Führungshülse, in der eine wendelförmige Führungsnut analog den Fig. 9a und 9b vorgesehen ist. Der Sicherungszapfen 11, 12 selbst weist einen radial abragenden Kulissenzapfen oder Mitnehmerzapfen auf, der in die Führungsnut eintaucht. Eine Drehbewegung der Wickelwelle führt somit zwangsläufig zu einem schneckenartigen Vortrieb des Sicherungszapfens 11, 12 und damit zu einer Verschiebebewegung, gegebenenfalls gekoppelt mit einer Drehbewegung des Sicherungszapfens 11, 12.

Die laderaumseitigen Halterungen 6 weisen wenigstens auf einer Seite - falls nur ein Sicherungszapfen 11, 12 auf einer Stirnseite des Kassettengehäuses 4, 5 vorgesehen ist - einen schlüssellochartig gestalteten Durchtritt mit einer nach oben ragenden, schmalen Kulissennut 9 auf, deren Breite auf die Breite des Sicherungszapfens 11 abgestimmt ist. Ein runder Abschnitt des schlüssellochartigen Durchtrittes ist etwas größer als der Durchmesser des tellerförmigen Kopfes 12 des Sicherungszapfens 11. Der schlüssellochartige Durchtritt ist in Verlängerung der rechteckartigen Aufnahmen der jeweiligen laderaumseitigen Halterung 6 hinter der jeweiligen Aufnahme vorgesehen. Vorzugsweise ist der schlüssellochartige Durchtritt in einem separaten, formsteifen und kraftübertragend mit der Fahrzeugkarosserie verbundenen Verstärkungsteil vorgesehen.

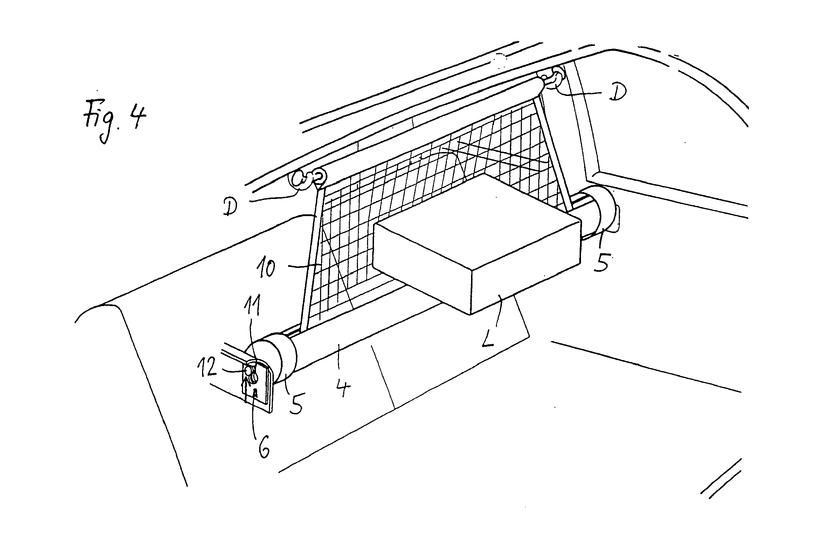

Bei einem Ausziehen des Trennnetzes 10 nach oben wird somit gemäß Fig. 3 der wenigstens eine stirnseitig vorgesehene Sicherungszapfen 11, 12, vorzugsweise beide Sicherungszapfen auf gegenüberliegenden Gehäuseseiten - mittels der zuvor beschriebenen Zwangskopplungseinrichtung - axial nach außen bewegt, wobei der tellerförmige Kopf 12 des Sicherungszapfens 11, 12 in den runden Abschnitt des schlüssellochartigen Durchtrittes hineintaucht. Die Gehäuseeinheit 4, 5 befindet sich hierdurch in einer vorgesicherten Position. Sobald nun gemäß Fig. 4 in das Trennnetz 10, das mit seiner oberen Auszugstange in dachseitige Halteaufnahmen D eingehängt ist, eine Biege- oder Zugbelastung durch hineingeschleudertes Ladegut L wirkt, wird eine weitere Ausziehbewegung des Trennnetzes 10 in grundsätzlich bekannter Weise blockiert. Dadurch wird zwangsläufig auf das Kassettengehäuse 4, 5 eine Zugbelastung nach oben ausgeübt, wodurch der wenigstens eine Sicherungszapfen 11 in die Kulissennut des schlüssellochartigen Durchtrittes der laderaumseitigen Halterung 6 hineintaucht (Fig. 4). Der tellerförmige Kopf 12 hintergreift die Kulissennut formschlüssig, so dass das Kassettengehäuse 4, 5 in entsprechender Weise formschlüssig in der laderaumseitigen Halterung 6 zurückgehalten wird. Die formschlüssige Wirkung des tellerförmigen Kopfes 12 in Verbindung mit der Kulissennut des schlüssellochartigen Durchtrittes erfolgt in Längsrichtung des Kassettengehäuses 4, 5 und damit längs der Wickelwelle des Trennnetzes 10 und ihrer Drehachse.

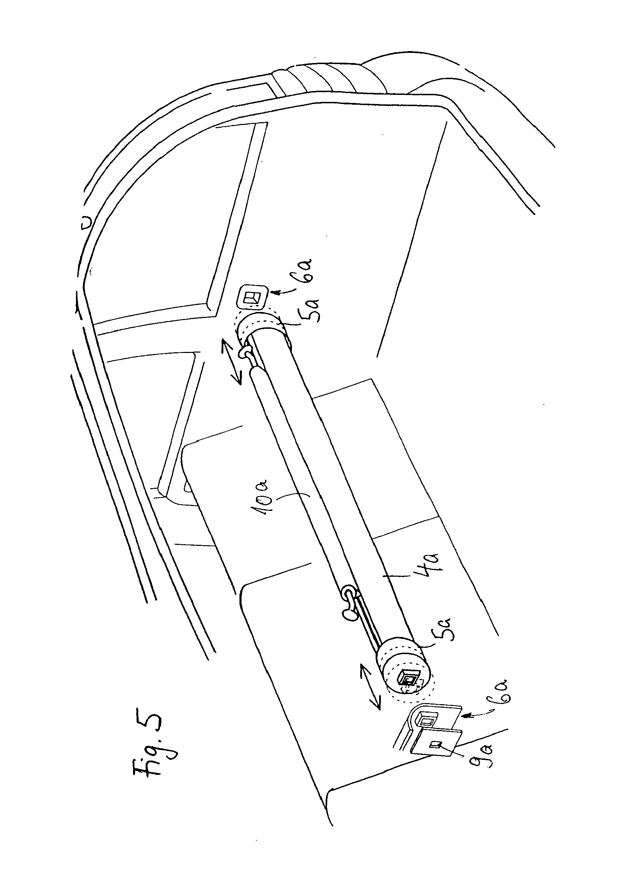

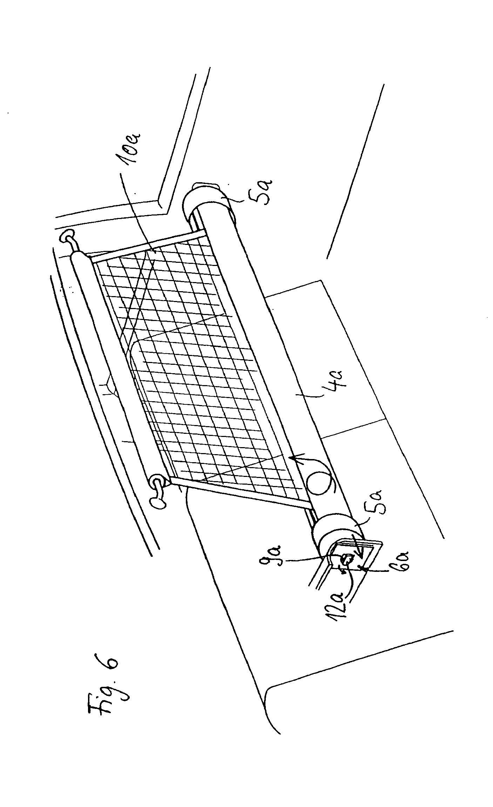

Die Ausführungsform nach den Fig. 5 und 6 sowie nach den Fig. 7a bis 8b entspricht im Wesentlichen der zuvor beschriebenen Ausführungsform, so dass zur Vermeidung von Wiederholungen auf die Beschreibung der vorherigen Ausführungsform verwiesen wird. Nachfolgend wird auf die Unterschiede bei der Ausführungsform nach den Fig. 5 und 6 sowie 7a bis 8b eingegangen. Wesentlicher Unterschied bei der Schutzvorrichtung gemäß den Fig. 5 und 6 sowie den Fig. 7a bis 8b und Fig. 9a und 9b ist es, dass dort ein Kopf 12a eine rotationsunsymmetrische Form aufweist, indem er rechteckförmig und T-artig gestaltet ist. Demzufolge weist der Kopf 12a zwei lange und zwei kurze Seiten auf. Der Sicherungszapfen 11a, 12a wird mittels der Zwangskopplungseinrichtung 17 bis 20 zusätzlich zu einer Axialbewegung auch noch um 90° zwangsgeführt verdreht, so dass sich der rechteckartige Kopf aus seiner Hochausrichtung (Fig. 7a) in eine Querausrichtung (Fig. 6 und 8a) verdreht. Der korrespondierende Durchtritt im Bereich der laderaumseitigen Halterung 6a weist ebenfalls Rechteckform auf, die in ihren Abmessungen auf die Rechteckform des Kopfes 12a abgestimmt ist. Die Rechteckform des Durchtrittes der laderaumseitigen Halterung 6a ist in Hochrichtung ausgerichtet. Dies bedeutet, dass sich die kurzen Seiten des Rechteckes oben und unten und die langen Seiten vertikal ausgerichtet zwischen den oberen und unteren kurzen Seiten erstrecken. In der hochgerichteten Stellung kann somit der rechteckförmige Kopf 12a des Sicherungszapfens 11a, 12a durch den rechteckigen Durchtritt 9a der laderaumseitigen Halterung 6a hindurchtauchen. Ein anschließendes Verdrehen um 90° (Fig. 6 und 8a) bewirkt zwangsläufig eine formschlüssige Verriegelung des Sicherungszapfens in der laderaumseitigen Halterung 6a.

Um die Schiebe- und Drehfunktion des Sicherungszapfens 11a, 12a verwirklichen zu können, ist das Kassettenprofil 4a mit einer Stirnkappe 16 versehen, die das als offenes Hohlprofil gestaltete Kassettenprofil 4a stirnseitig abschließt. Die Stirnkappe 16 ist mit einem koaxial in die Wickelwelle 13 hineinragenden Hülsenfortsatz 15 versehen, in dem der Sicherungszapfen 11a koaxial zur Drehachse der Wickelwelle 13 (strichpunktiert dargestellt) verschiebbar gelagert ist. In dem Hülsenfortsatz 15 ist eine Kulissenführung 17 vorgesehen, die sich linear achsparallel zur Drehachse der Wickelwelle 13 nach außen erstreckt und in einem äußeren Endbereich über einen Gewindegangabschnitt von etwa einer Viertelumdrehung gekrümmt ist, wie anhand der Fig. 7b und 8b erkennbar ist. Der Sicherungszapfen 11a ist mit einem radial abragenden Mitnehmerzapfen 18 versehen, der durch die Kulissenführung 17 hindurch nach außen abragt. Ein äußerer Stirnendbereich des Mitnehmerzapfens 18 ist zudem in einer wendelförmigen Führungsnut 20 einer Lagerhülse 19 geführt, die eine stirnseitige Lagerung der Wickelwelle 13 bildet und drehfest mit der Wickelwelle 13 verbunden ist. Die Lagerhülse 19 ist analog den Fig. 9a und 9b gestaltet.

Sobald nun das auf der Wickelwelle 13 befindliche Trennnetz 10a nach oben abgezogen wird, wird die Wickelwelle 13 zwangsläufig in Drehung versetzt. Dabei dreht sich die Lagerhülse 19 mit, wodurch sich der Mitnehmerzapfen 18 in der Kulissenführung 17 des Hülsenfortsatzes 15 linear verschiebt. Wenn das Trennnetz 10a seine ausgezogene Endposition nahezu erreicht hat, tritt der Mitnehmerzapfen 18 in den wendelförmig gekrümmten äußeren Endabschnitt der Kulissenführung 17 ein und wird um etwa eine Viertelumdrehung zusätzlich zu einer überlagerten Axialbewegung verdreht. Dadurch wird der Kopf 12a aus seiner Hochausrichtung in die Querausrichtung überführt. Zu diesem Zeitpunkt hat der Kopf 12a des Sicherungszapfens 11a bereits den rechteckigen Durchtritt 9a durchdrungen, so dass sich der Kopf 12a hinter dem Durchtritt 9a um 90° verdreht und so eine Verriegelung des Sicherungszapfens in der laderaumseitigen Halterung 6a bewirkt.

Bei einem Lösen des Trennnetzes 10a aus seiner ausgezogenen Schutzposition bewirkt eine nicht näher bezeichnete Rückholfeder der Wickelwelle 13 eine Zugkraft und damit eine Rückholkraft auf das Trennnetz 10a in Aufwickelrichtung, wodurch auch die Lagerhülse 19 in entsprechend umgekehrter Drehrichtung verdreht wird. Dadurch wird zwangsläufig der Mitnehmerzapfen in der Kulissenführung 17 wieder zurückgeführt, wodurch sich zunächst der Kopf 12a wieder in seine Hochausrichtung und anschließend aus dem Durchtritt 9a heraus in Richtung der Gehäuseeinheit bewegt.

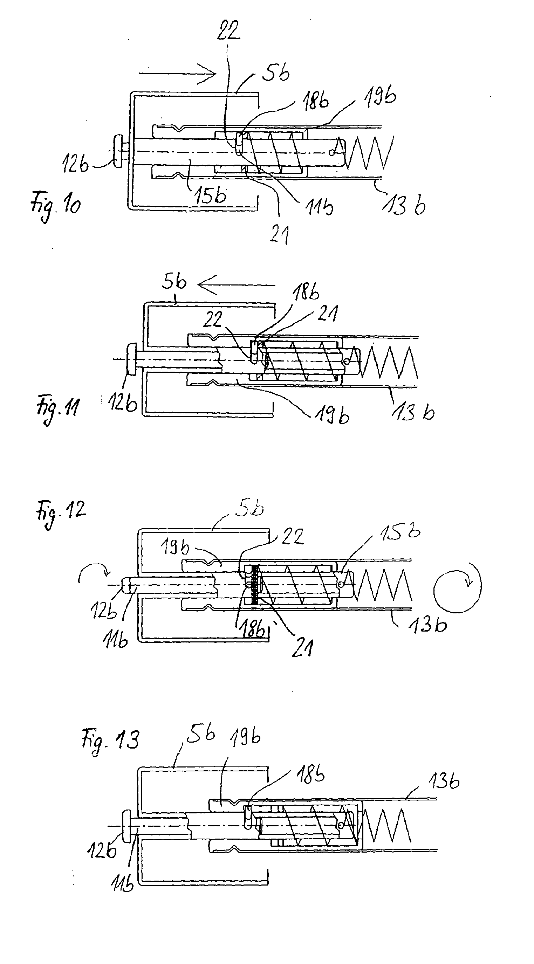

Bei der Ausführungsform nach den Fig. 10 bis 13 ist an einem Gehäuseseitenteil 5b ein Hülsenfortsatz koaxial zur Drehachse der Wickelwelle 13b nach innen abragend einstückig angeformt, in dem der Sicherungszapfen 11 b, 12b begrenzt drehbeweglich, nicht aber schiebebeweglich gelagert ist. Das Gehäuseseitenteil 5b ist in Pfeilrichtung (Fig. 10, 11) relativ zur Wickelwelle 13b verschiebbar gelagert, wobei das Gehäuseseitenteil 5b in unbelasteter Ausgangslage durch eine Druckfederanordnung in seine axial äußere Endstellung (Fig. 11) gedrückt ist. Der Hülsenfortsatz 15b und damit das Gehäuseseitenteil 5b sind in einer Lagerhülse 19b der Wickelwelle 13b schiebebeweglich gelagert, wobei die Lagerhülse 19b drehfest mit der Wickelwelle 13b verbunden ist. Der Hülsenfortsatz 15b und das Gehäuseseitenteil 5b hingegen sind lediglich axial schiebebeweglich, nicht aber drehbeweglich angeordnet. Der Sicherungszapfen 11 b, 12b weist einen radial nach außen abragenden Mitnehmerzapfen 18b auf, der durch eine radial über einen Viertelkreis in dem Hülsenfortsatz 15b vorgesehene Führungsnut 22 nach außen hindurchragt. Die Führungsnut 22 erstreckt sich radial etwa über ein Viertel des Umfangs des Hülsenfortsatzes 15b, so dass für den Sicherungszapfen 11 b, 12b eine begrenzte Verdrehbarkeit von 90° erzielbar ist.

Um eine Verdrehung des Sicherungszapfens 11 b, 12b herbeizuführen, ist dem Mitnehmerzapfen 18b ein Mitnehmerring 21 zugeordnet, der drehbeweglich auf dem Hülsenfortsatz 15b angeordnet und zudem in einem axialen Ringraum der Lagerhülse 19b axial verschiebbar angeordnet ist. Auf den Mitnehmerring 21 wirkt die Druckkraft einer Schraubendruckfeder, die in den Fig. 10 bis 13 dargestellt, aber nicht näher bezeichnet ist. Die Schraubendruckfeder presst den Mitnehmerring 21 gegen das freie Ende des durch die Führungsnut 22 hindurchragenden Mitnehmerzapfen 18b, wobei die Reibkräfte ausreichen, um den Mitnehmerzapfen 18b aus der aufrechten Position gemäß Fig. 11 in die verdrehte Position gemäß Fig. 12 bei einer entsprechenden Ausziehbewegung der Wickelwelle 13b bzw. des darauf befindlichen Flächengebildes zu bewirken. Dadurch verdreht sich zwangsläufig der T- oder rechteckförmig gestaltete Kopf 12b, so dass sich analog der Ausführungsform nach den Fig. 5 und 6 bzw. 7a bis 8b eine Verriegelung des Sicherungszapfens 11 b in der entsprechenden laderaumseitigen Halterung ergibt, wenn das Flächengebilde in seine Schutzposition ausgezogen wird. In entsprechend umgekehrter Weise wird der Kopf 12b wieder in seine Freigabeposition zurückgedreht, sobald das Flächengebilde wieder in seine aufgewickelte Ruheposition eingezogen wird. Das Vormontieren in den laderaumseitigen Halterungen erfolgt in einfacher Weise durch ein axiales nach innen Schieben des wenigstens einen Gehäuseseitenteiles 5b, das Ausrichten der Gehäuseseitenteile 5b relativ zu den laderaumseitigen Halterungen und das anschließende Freigeben der Gehäuseseitenteile, wodurch diese nach außen gedrückt werden und die Köpfe 12b der Sicherungszapfen 11 b, 12b in die entsprechenden Durchtritte eintauchen.

Wie anhand der Fig. 13 erkennbar ist, ist die Lagerhülse 19b beim dargestellten Ausführungsbeispiel aus plastisch deformierbarem und demzufolge energieabsorbierenden Material gestaltet. Bei einer entsprechenden Crashbelastung, bei der zwischen Gehäuseseitenteil 5b und Wickelwelle 13b eine Relativbewegung auftritt, gräbt sich der Mitnehmerzapfen 18b in das plastisch deformierbare Material der Lagerhülse 19b hinein, so das entsprechende Bewegungsenergie in Deformationsenergie umgewandelt wird. Die Lagerhülse 19b in Verbindung mit dem Mitnehmerzapfen 18b dienen somit als Energieabsorptionsmittel.

## Patentansprüche

1. Laderaum für ein Kraftfahrzeug mit einer Schutzvorrichtung, die ein flexibles Flächengebilde zum Rückhalten von Ladegut umfasst und eine formstabile Gehäuseeinheit aufweist, die in laderaumseitigen Halterungen lösbar gehalten ist, **dadurch gekennzeichnet, dass** Mittel (17 bis 20; 18b, 19b; 9, 11, 12) zum Überführen der Gehäuseeinheit (4, 5; 4a, 5a; 5b) in eine mit den laderaumseitigen Halterungen (6, 6a) formschlüssige Sicherungsposition abhängig von einer auf das Flächengebilde (10, 10a) wirkenden Zug-oder Biegebelastung vorgesehen sind.

2. Laderaum nach Anspruch 1, **dadurch gekennzeichnet, dass** die Mittel zum Überführen im Bereich der laderaumseitigen Halterungen (6) Führungsprofilierungen (9) aufweisen, die ausgehend von einer unbelasteten Befestigungslage der Gehäuseeinheit (4, 5) in Richtung einer Ausweichbewegung der Gehäuseeinheit bei einer Zug- oder Biegebelastung auf das Flächengebilde gerichtet sind, und dass an der Gehäuseeinheit (4, 5) Führungselemente (11, 12) vorgesehen sind, die derart korrespondierend zu den Führungsprofilierungen ausgeführt sind, dass sie bei einer Ausweichbewegung der Gehäuseeinheit in die Führungsprofilierungen (9) eintauchen und diese längs einer Drehachse einer Wickelwelle zum Auf-und Abwickeln des Flächengebildes formschlüssig hintergreifen.

3. Laderaum nach Anspruch 2, **dadurch gekennzeichnet, dass** die Führungsprofilierungen als in Fahrzeughochrichtung gerichtete Kulissenführungen (9) gestaltet sind, und dass die Führungselemente als längs der Drehachse der Wickelwelle abragende, mit einem verdickten Kopf (12) versehene Führungszapfen (11) ausgeführt sind, deren Durchmesser derart auf die Kulissenführungen (9) abgestimmt ist, dass die Führungszapfen (11) gleitend in den Kulissenführungen (9) verlagerbar sind.

4. Laderaum nach Anspruch 1, **dadurch gekennzeichnet, dass** die Mittel zum Überführen der Gehäuseeinheit in eine formschlüssige Sicherungsposition wenigstens ein der Gehäuseeinheit zugeordnetes Sicherungselement (11a, 12a; 11 b, 12b) umfassen, das zwischen einer verriegelten und einer entriegelten Stellung beweglich zu der Gehäuseeinheit (4a, 5a, 5b) angeordnet ist, wobei das Sicherungselement (11a, 12a; 11 b, 12) über eine Zwangskopplungseinrichtung (17 bis 20; 18b, 21, 22) derart mit einer Wickelwelle (13, 13b), auf der das flexible Flächengebilde (10a) auf-und abwickelbar gehalten ist, wirkverbunden ist, dass bei einer Drehbewegung der Wickelwelle das Sicherungselement drehrichtungsabhängig in seine verriegelte oder seine entriegelte Stellung überführt wird.

5. Laderaum nach Anspruch 4, **dadurch gekennzeichnet, dass** die Zwangskopplungseinrichtung ein mit der Drehbewegung der Wickelwelle gekoppeltes Bewegungsübertragungselement (19, 21) umfasst, das mit einer Zwangsführung (20) versehen ist, die auf das Sicherungselement (11a, 12a; 11b, 12b) derart wirkt, dass das Sicherungselement bei einer Drehbewegung der Wickelwelle in seine ver- oder entriegelte Position überführt wird.

6. Laderaum nach Anspruch 5, **dadurch gekennzeichnet, dass** das Sicherungselement mittels der Zwangsführung zwischen der verriegelten und der entriegelten Stellung um einen Drehwinkel ungleich einer halben oder einer vollen Umdrehung begrenzt verdrehbar ist.

7. Laderaum nach Anspruch 5, **dadurch gekennzeichnet, dass** die Zwangsführung eine wendelförmige Führungsnut (20) umfasst, in der ein drehfest mit dem Sicherungselement (11a, 12a) verbundener Kulissenzapfen (18) geführt ist.

8. Laderaum nach Anspruch 5, **dadurch gekennzeichnet, dass** die Zwangsführung eine mit der Wickelwelle (13b) drehfeste Mitnehmerscheibe (21) umfasst, die kraftschlüssig oder formschlüssig auf einen mit dem Sicherungselement (11 b, 12b) drehfest verbundenen Mitnehmerzapfen (18b) einwirkt.

9. Laderaum nach Anspruch 8, **dadurch gekennzeichnet, dass** dem Sicherungselement (11b, 12b) Energieabsorptionsmittel zugeordnet sind, die zwischen Sicherungselement (11 b, 12b) und Wickelwelle (13b) bei durch einen Fahrzeugaufprall bewirkten Belastungen energieumwandelnd wirken.

10. Laderaum nach Anspruch 9, **dadurch gekennzeichnet, dass** die Energieabsorptionsmittel wenigstens ein plastisch deformierbares Pufferelement umfassen, das bei einer Relativbewegung zwischen Sicherungselement (11b, 12b) und Wickelwelle (13b) wirksam wird.

11. Schutzvorrichtung für einen Kraftfahrzeuginnenraum, insbesondere für einen Laderaum nach einem der vorhergehenden Ansprüche, die die Merkmale der Schutzvorrichtung des Laderaumes nach wenigstens einem der vorhergehenden Ansprüche umfasst.
